# EUROPÄISCHE PATENTANMELDUNG

(11) **EP 0 754 536 A1**
(43) Veröffentlichungstag der Anmeldung: **22.01.1997**
(21) Anmeldenummer: 96111109.3
(22) Anmeldetag: 10.07.1996
(51) Int. Cl.: B29C 47/86, B29C 47/30, B26D 1/10

(54) **Vorrichtung zum Absperren einer Schmelze insbesondere aus Kunststoff**

(30) Priorität: 18.07.1995 DE 19526165
(71) Anmelder: RIETER AUTOMATIK GmbH, D-63762 Grossostheim (DE)
(72) Erfinder: Locker, Peter, 63762 Grossostheim (DE); Meidhof, Helmuth, 63762 Grossostheim (DE)
(74) Vertreter: Bardehle, Heinz, Dipl.-Ing.

(57) **Zusammenfassung**

Die Erfindung betrifft eine Vorrichtung zum Absperren einer Schmelze insbesondere aus Kunststoff, die an einer Düsenplatte (1) in Form von Schmelzesträngen (3) austritt, deren Düsen (2) mit einem über der Düsenplatte (1) verschiebbaren Absperrschieber (5) verschließbar sind. Der Absperrschieber (5) endet in einer spitzwinkligen Schneidkante (6), die bei dem das Verschließen der Düsen bewirkenden Verschieben des Absperrschiebers (5) die aus den Düsen (2) austretenden Schmelzestränge (3) abschneidet, wobei der Absperrschieber (5) mit Kanälen für die wahlweise Durchleitung eines Kühlmediums versehen ist, mit dem der Absperrschieber (5) bis unter die Erstarrungstemperatur der Schmelze abkühlbar ist.

## Beschreibung

Die Erfindung bezieht sich auf eine Vorrichtung zum Absperren einer Schmelze insbesondere aus Kunststoff, die an einer Düsenplatte in Form von Schmelzesträngen austritt, deren Düsen mit einem über der Düsenplatte verschiebbaren Absperrschieber verschließbar sind.

Eine derartige Vorrichtung ist aus der europäischen Patentschrift 93 358 bekannt. Bei dieser Vorrichtung ist die Düsenplatte durch eine mit Bohrungen versehene Lochplatte abgedeckt, wobei die Bohrungen mit den Düsen der Düsenplatte in und außer Deckung gebracht werden können. Im Falle der Deckung der Düsen und der Bohrungen ist die Vorrichtung für eine Schmelze durchlässig. Im Falle der Verschiebung der Lochplatte aus dem Bereich der Deckung heraus sperrt die Vorrichtung den Schmelzefluß ab. Insbesondere bei relativ dünnflüssigen Kunststoffschmelzen, z.B. aus Polyamid, ergibt sich der Effekt, daß die beiin Absperren in den Bohrungen der Lochplatte verbliebene Schmelze nachträglich heraustropft, was zu einer unerwünschten Fadenbildung führen kann, die für die einwandfreie Wirkungsweise einer weiterverarbeitenden Maschine unerwünscht ist.

Es ist darüberhinaus aus der DE-OS 39 13 773 und der Europäischen Patentanmeldung 0 375 583 bekannt, den Durchfluß eines Schmelzestranges mittels eines Absperrschiebers zu unterbrechen, wobei der Absperrschieber mit einer Schneidkante zum Abtrennen des Schmelzestranges versehen ist.

Die Erfindung geht von der eingangs genannten Vorrichtung aus, es liegt ihr die Aufgabe zugrunde, das Haftenbleiben von Schmelze an dem Absperrschieber nach Verschließen der Düsenplatte zu vermeiden und den Verschluß der Düsenplatte besonders sicher zu gestalten. Erfindungsgemäß geschieht dies dadurch, daß der Absperrschieber in einer spitzwinkligen Schneidkante endet, die bei dem das Verschließen der Düsen bewirkenden Verschieben des Absperrschiebers die aus den Düsen austretenden Schmelzestränge abschneidet, wobei der Absperrschieber mit Kanälen für die wahlweise Durchleitung eines Kühlmediums versehen ist, mit dem der Absperrschieber bis unter die Erstarrungstemperatur der Schmelze abkühlbar ist.

Das Problem wird durch eine mit äußerst geringem Aufwand verbundene Maßnahme gelöst, nämlich das durch die Schneidkante bewirkte Abtrennen der Schmelzestränge, so daß diese nach dem Abtrennen wie im normalen Ablauf abgezogen werden können, wobei aber die jeweilige Düse sofort verschlossen wird, ohne das im Bereich des Absperrschiebers noch irgenwelche Schmelzereste verbleiben können, wobei durch die Wirkung des die Durchlässe im Absperrschieber durchströmenden Kühlmediums dafür gesorgt wird, daß mit dem Absperrschieber die Schmelze bis unter ihre Erstarrungstemperatur abgekühlt wird. Da sich die Temperatur des Absperrschiebers wegen des Berührungskontaktes zwischen Absperrschieber und Düsenplatte auf die Düsenplatte überträgt, ergibt sich hiermit der Effekt, daß die in den Düsen anstehende Schmelze ebenfalls unter ihre Erstarrungstemperatur abgekühlt wird, so daß ein Nachfließen von Schmelze aus einem der Düsenplatte vorgeordneten Gefäß von der in den Düsenöffnungen erstarrten Schmelze aufgefangen wird.

In den Figuren ist ein Ausführungsbeispiel der Erfindung dargestellt.

Es zeigen:
- Figur 1: die Vorrichtung in perspektivischer Sicht bei geöffneter Düsenplatte;
- Figur 2: die Vorrichtung in Seitensicht bei geschlossener Düsenplatte.

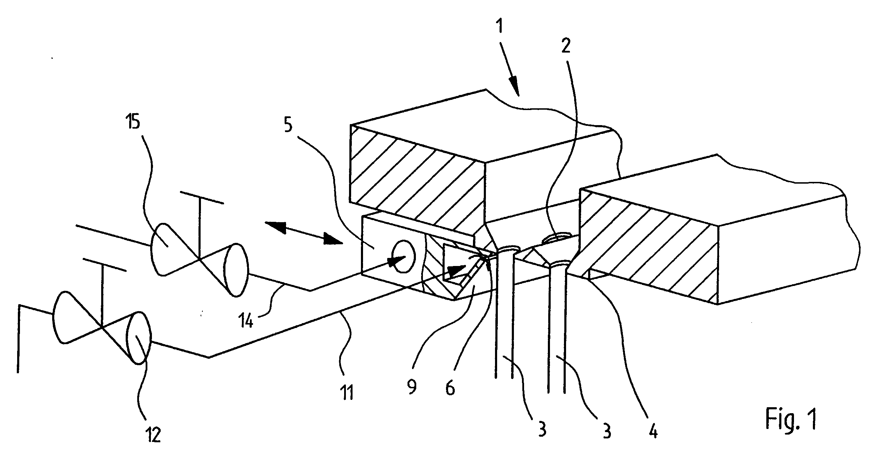

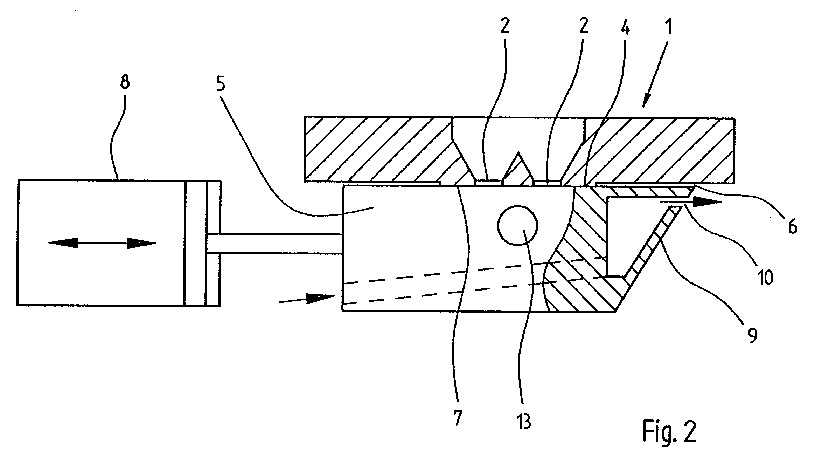

In der Figur 1 ist eine Düsenplatte 1 im Schnitt dargestellt, die ähnlich der in der europäischen Patentschrift 93 358 dargestellten Düsenplatte an irgendein vorhergehendes Organ, z.B. einem Autoklaven, angeschlossen werden kann. Der Düsenplatte 1 wird eine flüssige Schmelze aus Kunststoff zugeführt, der dann über die Düsen 2 am Boden der Düsenplatte 1 in Form der Stränge 3 austritt. Die Düsenplatte besitzt im Bereich ihrer Düsen 2 einen durchgehenden, ebenen Ansatz 4, den der Absperrschieber 5 unter dichtender Anlage an den Vorsprung 4 überstreicht. Der Absperrschieber 5 ist durch einen in der Figur 1 nicht dargestellten Schubmechanismus gemäß dem eingezeichneten Doppelpfeil hin und her bewegbar. Bezüglich des Schubmechanismus sei auf die Figur 2 verwiesen.

In der in Figur 1 dargestellten Betriebslage ist der Absperrschieber so weit zurückgezogen, daß er die Düsen 2 freigibt, so daß aus diesen, wie gesagt, die Kunststoffstränge 3 austreten können. Um die austretende Schmelze abzusperren, wird der Absperrschieber 5 in die in der Figur 2 dargestellte Lage verschoben.

Figur 2 zeigt die Düsenplatte 1 im Schnitt mit den Düsen 2. Der Absperrschieber 5 ist hier in seiner vorgeschobenen Lage dargestellt, in die er aus der Lage gemäß Figur 1 durch Überstreichen des Vorsprungs 4 gelangt, wobei die spitzwinkelige Schneidkante 6 des Absperrschiebers 5 die aus den Düsenöffnungen 2 austretenden Stränge 3 abtrennt. Mit seiner ebenen Oberseite 7 legt sich der Absperrschieber 5 dichtend an die ebene Oberfläche des Ansatzes 4 an, so daß der weitere Fluß der Schmelze aus den Düsen 2 unterbunden ist. Die Bewegung des Absperrschiebers 5 wird durch die nur prinzipiell dargestellte Kolbenzylindereinheit 8 gesteuert. Durch das von der Schneidkante bewirkte Abtrennen der Schmelzestränge und das bei der entsprechenden Bewegung des Absperrschiebers 5 unmittelbar darauf erfolgende Abdichten der Düsen 2 ergibt sich der Effekt, daß die Schmelzestränge 3 ohne irgendeinen Rückstand von der Düsenplatte 1 abgetrennt werden und gemäß einer folgenden Verarbeitungsmaschine vollständig weiterverarbeitet werden können. Irgendein Rest von Kunststoffschmelze kann dabei an keiner Stelle verbleiben und dementsprechend auch nicht abtropfen, da die Düsen 2 vollständig abgeschlossen werden. Irgendein Nachtropfen verbleibender Kunststoffschmelze ist dabei also nicht möglich.

Um dem möglichen Effekt zu begegnen, daß von der Schneidkante 6 abgetrennte Kunststoffstränge an der Schneidkante 6 und an der zugehörigen Stirnfläche 9 festkleben, ist bei dem dargestellten Ausführungsbeispiel dicht an der Schneidkante 6 eine schlitzartige Öffnung 10 vorgesehen, aus der ein Trennmedium, z.B. Luft oder Dampf, austritt, das dem Absperrschieber 5 von der Seite her über die Zuleitung 11 und das Ventil 12 zugeführt wird. An der Schneidkante 6 und der Stirnfläche 9 klebendes Kunststoffmaterial wird dann von dem aus der Öffnung 10 austretenden Trennmedium weggeblasen oder abgelöst bzw. von vorneherein am Ankleben gehindert.

Die in den Figuren 1 und 2 dargestellte Vorrichtung enthält weiterhin den Kanal 13 für ein Kühlmedium, z.B. Luft oder Öl, das den Absperrschieber 5 durchsetzt und diesen gegebenenfalls unter die Schmelztemperatur des zu verarbeitenden Materials absenkt. Hierdurch wird erreicht, daß sich die von dem Kühlmedium auf den Absperrschieber 5 übertragene Temperatur auch der Düsenplatte 1 mitteilt, da die Oberseite 7 des Absperrschiebers 5 in direktem Berührungskontakt mit dem Ansatz 4 der Düsenplatte 1 steht. Mithin wird auf diese Weise auch die Düsenplatte 1 gekühlt, so daß das in den Düsenöffnungen 2 anstehende Kunststoffmaterial erstarrt, was die Dichtwirkung der Vorrichtung verbessert. Wie Figur 1 zeigt, wird das Kühlmedium über die Zuleitung 14 und das Ventil 15 dem Kanal 13 zugeführt. Auf die Darstellung der Ableitungen für das Kühlmedium und das Trennmedium wurde in den Figuren 1 und 2 aus Gründen der Übersichtlichkeit verzichtet, da sich dabei sowieso nur für sich um bekannte Maßnahmen handelt.

## Patentansprüche

1. Vorrichtung zum Absperren einer Schmelze insbesondere aus Kunststoff, die an einer Düsenplatte (1) in Form von Schmelzesträngen austritt, deren Düsen (2) mit einem über der Düsenplatte (1) verschiebbaren Absperrschieber (5) verschließbar sind, **dadurch gekennzeichnet**, daß der Absperrschieber (5) in einer spitzwinkligen Schneidkante (6) endet, die bei dem das Verschließen der Düsen (2) bewirkenden Verschieben des Absperrschiebers (5) die aus den Düsen (2) austretenden Schmelzestränge abschneidet, wobei der Absperrschieber (5) mit Kanälen (13) für die wahlweise Durchleitung eines Kühlmediums versehen ist, mit dem der Absperrschieber (5) bis unter die Erstarrungstemperatur der Schmelze abkühlbar ist.

2. Vorrichtung nach Anspruch 1, **dadurch gekennzeichnet**, daß die in der Schneidkante (6) endende Stirnfläche (9) des Absperrschiebers (5) mit Öffnungen für den Austritt eines Trennmittels versehen ist.
